# EUROPEAN PATENT APPLICATION

(11) **EP 3 564 977 A1**
(43) Date of publication of application: **06.11.2019**
(21) Application number: 17885944.3
(22) Date of filing: 29.12.2017
(51) Int. Cl.: H01G 9/20

(54) **DYE-SENSITIZED SOLAR CELL**

(30) Priority: 30.12.2016 KR 20160184499
(71) Applicant: Dongjin Semichem Co., Ltd., Incheon 22824 (KR)
(72) Inventor: KIM, Young Mi, Seongnam-si Gyeonggi-do 13486 (KR); KIM, Jong Bok, Seongnam-si Gyeonggi-do 13486 (KR); BAEK, Jong Gyu, Seongnam-si Gyeonggi-do 13486 (KR); SHIN, Kyu Soon, Seongnam-si Gyeonggi-do 13486 (KR)
(74) Representative: Grünecker Patent- und Rechtsanwälte PartG mbB
(86) International application number: PCT/KR2017/015765
(87) International publication number: WO 2018/124825

(57) **Abstract**

The present invention relates to a dye-sensitized solar cell electrode and a dye-sensitized solar cell including the same, and particularly, to a dye-sensitized solar cell electrode and a dye-sensitized solar cell including the same wherein a membrane is formed on the surface of a working electrode, and thus a dye is prevented from being separated from an oxide semiconductor layer, and the membrane is formed on the surface of a counter electrode, and thus electrolyte elements (I⁻, I₃⁻, etc.) are passed therethrough, but the dye is not allowed to be adsorbed, thereby improving the reliability and efficiency of a dye-sensitized solar cell.

## Description

### [TECHNICAL FIELD]

The present invention relates to a dye-sensitized solar cell, and particularly to a dye-sensitized solar cell that can improve reliability and efficiency by forming a membrane.

### [BACKGROUND OF ART]

The descriptions below provide only the background information relating to the present invention, and do not constitute the prior art.

A dye-sensitized solar cell mainly consists of a substrate, a conductive film, a working electrode including an oxide semiconductor and a dye, an electrolyte, and a counter electrode. The dye is adsorbed to the oxide semiconductor represented by TiO₂, and electrons that receive light and are excited are injected into the TiO₂. The injected electrons pass through the TiO₂, reach a conductive film and a substrate, and are transferred to an external circuit. Electrons returning from the external circuit are injected into the TiO₂ by an electron transfer function of a redox electrolyte solution through a counter electrode, thus reducing the electron-deficient dye. Herein, while the electrons injected from the dye pass through the TiO₂ layer, the conductive film, and the substrate before being transferred to the external circuit, the injected electrons may stay at an empty surface energy level on the surface of the TiO₂. In this case, the electrons react with the redox electrolyte solution, do not rotate along the circuit, and inefficiently disappear, and on the surface of the conductive film, the electrons generated by light are also consumed by the reaction with the redox electrolyte, thus decreasing energy conversion efficiency.

Further, the adsorption between the dye and the oxide semiconductor is mostly formed by chemical bonds of the anchoring group of the dye and the oxide (for example, TiO₂), and is partly achieved by physical bonds due to the aggregation of the dye itself.

The physical bonds due to the aggregation of the dye cause the dye to be separated into the electrolyte solution during the operation of a cell. Most of the separated dye floats in the electrolyte solution, but a part thereof forms a bond again with the oxide semiconductor or forms a bond with a conductive film, and particularly, in case a bond is formed with the conductive film of a counter electrode, the redox reaction between the electrolyte solution and the counter electrode may be influenced, and thus a fill factor (FF) may decrease and efficiency may be significantly lowered.

Meanwhile, in the case of a dye having excellent bonding capacity, adsorption with the oxide semiconductor is properly achieved, thus reducing an adsorption time and exhibiting a high adsorption amount, thereby improving current density, but a bond between the dye and a conductive film may also be easily formed.

Thus, in the prior art, a technology of forming an insulation layer on the surface of the oxide semiconductor and on the surface of the conductive film exposed through the dye so as to prevent adsorption between the dye and the oxide semiconductor has been disclosed, but it was insufficient to prevent the aggregation and adsorption of the dye to improve the reliability and efficiency of a dye-sensitized solar cell because it cannot surround the surface of the dye.

### [DETAILED DESCRIPTION OF THE INVENTION]

### [Technical Problem]

In order to solve the problems of the prior art, it is an object of the present invention to provide a dye-sensitized solar cell that can improve reliability and efficiency of a dye-sensitized solar cell by forming a membrane.

### [Technical Solution]

In order to achieve the object, the present invention provides
a dye-sensitized solar cell including:
a working electrode including a conductive film, an oxide semiconductor on the conductive film, and a dye on the oxide semiconductor;
a counter electrode opposing the working electrode;
an electrolyte solution intervening between the working electrode and the counter electrode; and
a membrane covering at least a part of the dye or the counter electrode.

### [ADVANTAGEOUS EFFECTS]

The present invention forms a membrane on the surface of a working electrode to prevent a dye from being separated from an oxide semiconductor layer, and thus can secure reliability and efficiency of a dye-sensitized solar cell.

The present invention also forms the membrane on the surface of a counter electrode so that electrolyte elements (I⁻, I₃⁻, etc) may be passed through, but the dye may not be adsorbed, thereby preventing a decrease in a fill factor (FF) due to hyperabsorption of the dye, and thus, can secure the reliability and efficiency of a dye-sensitized solar cell.

In addition, the membrane forms a transparent film on the surface of an electrode, thereby maximizing visibility due to the transparency of the dye-sensitized solar cell.

### [BRIEF DESCRIPTION OF THE DRAWINGS]

FIG. 1 shows a dye-sensitized solar cell electrode according to the first embodiment of the present invention.
FIG. 2 shows a dye-sensitized solar cell electrode according to the second embodiment of the present invention.
FIG. 3 shows a dye-sensitized solar cell electrode according to the third embodiment of the present invention.
FIG. 4 is a drawing showing that a trialkoxysilane compound according to the embodiment of the present invention is bonded to the surface of a working electrode through a hydrolysis-condensation reaction.
FIG. 5 is a graph comparing the electrode activities when a membrane film is applied to the working electrodes according to an example and a comparative example.
FIG. 6 is a graph comparing the electrode activities when a membrane film is applied to the counter electrodes according to an example and a comparative example.

### [DETAILED DESCRIPTION OF THE EMBODIMENTS]

Hereinafter, the embodiments of the present invention will be explained in detail with reference to the attached drawings so that a person having ordinary knowledge in the art may easily practice them.

However, the present invention may be realized in various forms, and is not limited to the embodiments explained herein.

Throughout the specification, when it is described that a part "comprises" a constructional element, unless specifically described to the contrary, it does not mean that other constructional elements are excluded, but it means that the part may further include other constructional elements.

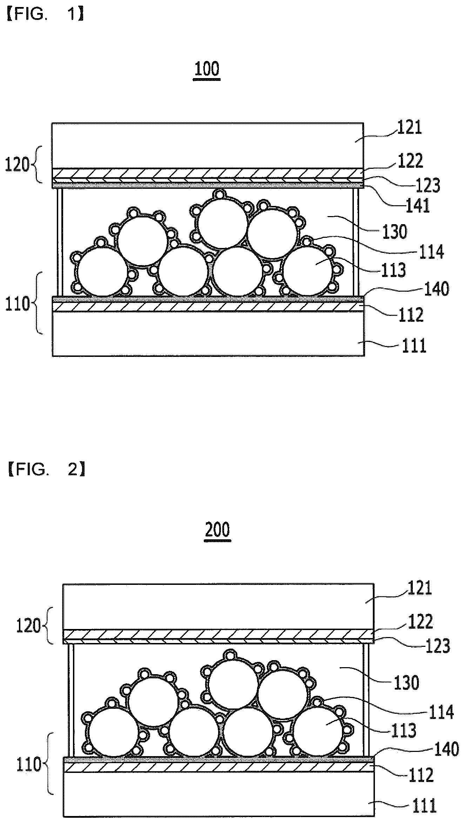

FIGS. 1 to 3 are drawings respectively showing a dye-sensitized solar cell according to one embodiment of the present invention.

Referring to FIGS. 1 to 3, a dye-sensitized solar cell 100 according to the present invention includes a working electrode (110), a counter electrode (120), an electrolyte solution (130), and a membrane (140). Specifically, the working electrode (110) includes a conductive film (112) and an oxide semiconductor (113) to which a dye (114) is adsorbed on a substrate (111), and the counter electrode (120) includes a conductive film (122) and a catalyst layer (123) on a substrate (121).

The membrane (140) according to the present invention is formed so as to cover the surface of the working electrode (110), the surface of the counter electrode (120), or both surfaces of the working electrode (110) and the counter electrode (120). Specifically, the membrane (140) may be formed so as to cover only the surface of the working electrode (110) of a dye-sensitized solar cell electrode or to cover only the surface of the counter electrode (120) of a dye-sensitized solar cell electrode, or it may be formed on both surfaces of the working electrode (110) and the counter electrode (120) of a dye-sensitized solar cell electrode to cover the whole dye-sensitized solar cell electrode.

A substrate (111 or 121) is a constructional element corresponding to a base for constituting a working electrode (110) or a counter electrode (120), and it performs a function of transferring electrons.

As the substrate (111 or 121), any known substrates may be used, and specifically, a glass substrate, a soda lime glass substrate, and the like may be used. A conductive film (112 or 122) is formed on the substrate (111 or 121) of the working electrode (11) or counter electrode (120), and it performs a function as a passage that transfers electrons. Specifically, in the working electrode (110), the conductive film (112) transfers electrons from the oxide semiconductor (113) to the substrate (111), and in the counter electrode (120), the conductive film (122) transfers electrons from the substrate (121) to the catalyst layer (123).

The oxide semiconductor (113) is formed on the conductive film (112) of the working electrode (110), and it consists of porous metals and performs a function of adsorbing a dye and transferring electrons that are generated from the dye by light to the conductive film.

The oxide semiconductor (113) may be selected from the group consisting of known materials such as titanium dioxide (TiO₂), tin dioxide (SnO₂), zinc oxide (ZnO), and the like, and combinations thereof.

The dye (114) is bonded with the oxide semiconductor (113) and absorbs light to produce electrons.

The dye (114) is not specifically limited in terms of the constructional materials, but any known dyes may be used, and specifically, an organic dye or a ruthenium-based dye may be used.

The catalyst layer (123) is formed on the conductive film (122) of the counter electrode (120), and performs a function of an electron donor that donates electrons to the electrolyte. As the catalyst layer (123), platinum (Pt), a carbon-based material, and the like may be used, and specifically, platinum (Pt) may be used.

The electrolyte solution (130) exists in a void between the working electrode (110) and the counter electrode (120), and performs a function of reducing the dye of the working electrode again through the counter electrode, after electrons generated from the dye flow to an external conducting wire through the working electrode. As the electrolyte solution, any electrolyte known to be used in a dye-sensitized solar cell may be used, and specifically, imidazole-based compounds and iodine may be used. Specifically, the electrolyte solution (130) may consist of a solution of I₃⁻/I⁻ in which 0.70 M of 1-methyl-3-propyl-immidazolium iodide, 0.10 M of Lil, 40 mM of I₂ (iodine), and 0.5 M of 4-tert-butylpyridine are dissolved in 3-methoxypropionitrile, but is not limited thereto.

The dye-sensitized solar cell according to one embodiment of the present invention includes the membrane (140) that covers at least a part of dye (113) or counter electrode (120). Specifically, the membrane (140) may be formed so as to cover the counter electrode (120) or cover the dye (114) of the working electrode (110), the membrane (140) may be formed so as to cover the dye (114) and the oxide semiconductor (113), and the membrane may be formed so as to cover the dye (114), the oxide semiconductor (113), and the conductive film (112). Further, the membrane (140) may cover the dye (114), the oxide semiconductor (113), and the conductive film (112) of the working electrode (110), and simultaneously, an additional membrane (141) may be formed to cover the counter electrode (120).

The membrane (140) according to one embodiment of the present invention may include at least one of a condensation product of the following Chemical Formula 1 or a condensation product of the following Chemical Formula 2, and a condensation product of Chemical Formula 1 and Chemical Formula 2.

[Chemical Formula 1] A(OR)₃

[Chemical Formula 2] (OR)₃A-X-B(OR)₃

Herein, A and B are each independently SiR, GeR, P, PR₂, or Al, each R is independently hydrogen, deuterium, a linear or branched C₁₋₃₀ alkyl group, or a C₃₋₃₀ cycloalkyl group, and X is 0 or one of a C₂₋₃₀ alkene, a C₆₋₃₀ aryl, an alkoxy, an epoxy, an amine, an ester, an amide, a carbonyl, an ether, a thioether, a thiophene, a furan, and a cyclohexyl.

The membrane (140) may include silane compounds or phosphorus compounds, and specifically, one or more selected from the group consisting of isooctyltrimethoxysilane, acrylate and methacrylate functional silanes, aldehyde functional silanes, amino functional silanes, cyclic azasilanes, water-borne aminoalkyl silsesquioxane oligomers, anhydride functional silanes, azide functional silanes, carboxylate, phosphonate and sulfonate functional silanes, epoxy functional silanes, ester functional silanes, halogen functional silanes, hydroxyl functional silanes, isocyanate and masked isocyanate functional silanes, phosphine and phosphate functional silanes, sulfur functional silanes, vinyl and olefin functional silanes, multifunctional and polymeric silanes, UV active and fluorescent silanes, chiral silanes, biomolecular probes, trihydrosilanes, dipodal silyl hydrides, dipodal silanes - non-functional, and organosilane-modified silica nanoparticles may be used.

More specifically, the membrane (140) may consist of the following compounds, but is not limited thereto.

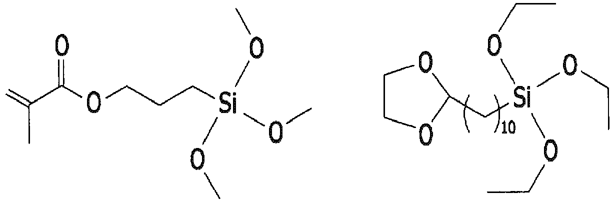

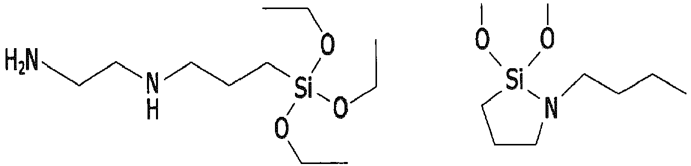

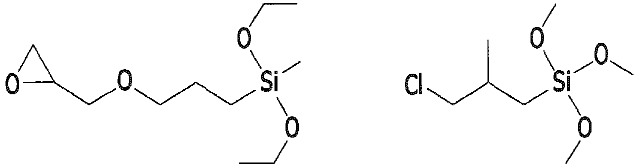

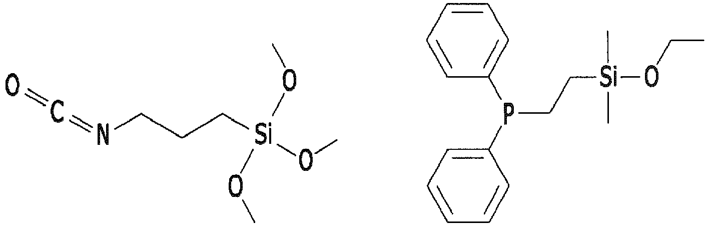

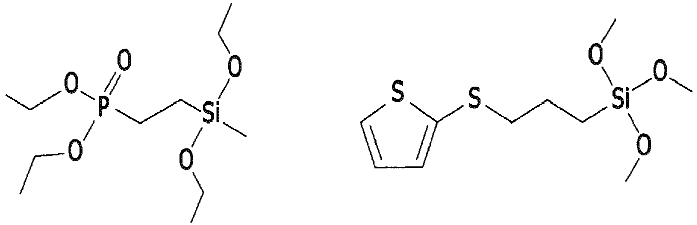

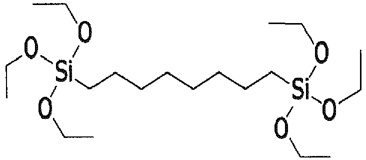

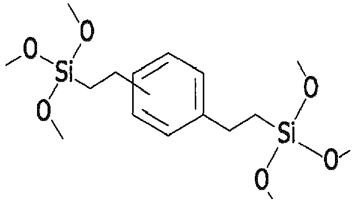

The membrane (140) according to one embodiment of the present invention is a semi-permeable membrane through which dye does not pass, but through which electrolyte elements (I⁻, I₃⁻, etc.) do pass. Thus, the membrane (140) may be formed on the surface of a working electrode to prevent the dye (114) bonded to oxide semiconductor (113) of the working electrode (110) from being separated to decrease a fill factor, and it may be formed on the surface of a counter electrode to prevent the dye (114) that is separated from the working electrode (110) and moves around the electrolyte solution (130) from being bonded to the counter electrode to decrease a fill factor.

The membrane (140) may consist of at least one molecular layer, and the thickness of the membrane (140) may be controlled according to the molecular size of a material constituting the molecular layer.

The membrane (140) may be formed with a thickness of 0.1 Å to 1000 Å, and specifically, it may be formed with a thickness of 0.1 Å to 500 Å.

It was confirmed that if the membrane (140) is formed with a thickness of the above range, the effect of preventing dye separation, and the transparency, are excellent.

A dye-sensitized solar cell according to one embodiment of the present invention includes: a working electrode; a counter electrode; an electrolyte solution; and a membrane covering the surface of the working electrode, the surface of the counter electrode, or both surfaces of the working electrode and the counter electrode.

The dye-sensitized solar cell (100) including the membrane (140) according to one embodiment of the present invention can remarkably improve energy conversion efficiency by preventing an electron loss passage that may be generated while electrons produced by light are transferred to the external circuit, preventing the separation of dye (114) due to hyperabsorption, and also preventing the separated dye (114) from being readsorbed to the counter electrode (120), thereby remarkably improving the reliability and efficiency of the dye-sensitized solar cell electrode.

Hereinafter, preferable examples are presented for better understanding of the present invention, but these examples are presented only as illustrations of the present invention and the scope of the present invention is not limited thereby.

### [Example 1] Preparation of a dye-sensitized solar cell

A dye-sensitized solar cell including a working electrode on which a membrane is formed, as shown in FIG. 2, was prepared by a common preparation process of a dye-sensitized solar cell, except that the surfaces of a working electrode, that is, the surface of a conductive substrate, the surface of an oxide semiconductor layer (TiO₂) formed on the working electrode, and the surface of a dye adsorbed on the surface of the oxide semiconductor layer, were dipped in a solution including isooctyltrimethoxysilane.

Herein, the working electrode was treated with an isooctyltrimethoxysilane solution, after the dye was adsorbed.

The conditions were as follows.

On FTO glass, a DTY5 photoelectrode paste (8 *µ*m, Dongjin Semichem Co., Ltd., Korea) was coated by a doctor blade method. The paste on the photoelectrode was calcined at 450 °C for 30 minutes to form a TiO₂ thin film layer with a thickness of 8 *µ*m.

The calcined thin film layer was immersed in a dye solution in which 0.5 mM of Z907 dye was dissolved in an ethanol solvent, at room temperature for 20 hours. The TiO₂ thin film coated with the dye was rinsed with ethanol, and immersed in an isooctyltrimethoxysilane solution for 30 minutes. The TiO₂ thin film on which a silane membrane was formed was rinsed again with ethanol, and thereafter, a solar cell was manufactured according to a common solar cell manufacturing method.

Herein, as a redox electrolyte solution used in a solar cell, a solution in which 1.0 M of 1,3-dimethyl imidazolium iodide, 30 mM of iodine, 50 mM of Lil, 0.1 M of guanidinium thiocyanate, and 0.5 M of t-butylpyridine were dissolved in mixed solvents of valeronitrile and acetonitrile at a volume ratio of 15:85 was used.

### [Example 2] Preparation of a dye-sensitized solar cell

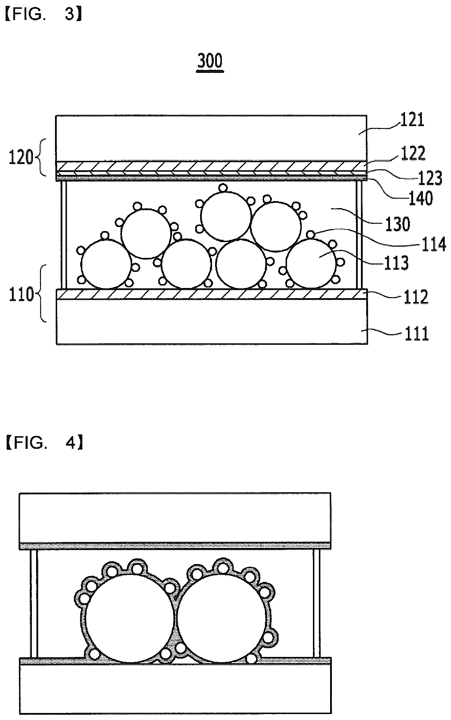

A dye-sensitized solar cell including a counter electrode on which a membrane is formed, as shown in FIG. 3, was prepared by a common preparation process of a dye-sensitized solar cell, except that the surface of a counter electrode was dipped in a solution including isooctyltrimethoxysilane.

Herein, the counter electrode was treated with an isooctyltrimethoxysilane solution, after platinum was formed.

The conditions were as follows.

On FTO glass, a DTY5 photoelectrode paste (8 *µ*m, Dongjin Semichem Co., Ltd., Korea) was coated by a doctor blade method. The paste on the photoelectrode was calcined at 450 °C for 30 minutes to form a TiO₂ thin film layer with a thickness of 8 *µ*m.

The calcined thin film layer was immersed in a dye solution in which 0.2 mM of D35 was dissolved in mixed solvents of acetonitrile and t-butyl alcohol at a volume ratio of 1:1, at room temperature for 20 hours. The TiO₂ thin film coated with the dye was rinsed with ethanol to prepare a working electrode.

In order to prepare a counter electrode, a solution of 7 mM HPtCl₆ was dripped on a FTO glass, and then calcined at 450 °C for 20 minutes to form a catalyst layer. The catalyst layer was immersed in an isooctyltrimethoxysilane solution for 30 minutes, then rinsed with ethanol, and thereafter, a solar cell was manufactured according to a common solar cell manufacturing method.

### [Comparative Example 1] Preparation of a dye-sensitized solar cell

A dye-sensitized solar cell was prepared by the same method as Example 1, except that a membrane was not formed on either a working electrode or a counter electrode.

### [Comparative Example 2] Preparation of a dye-sensitized solar cell

A dye-sensitized solar cell was prepared by the same method as Example 2, except that a membrane was not formed on either a working electrode nr a counter electrode.

### [Experiment 1] Comparison of the properties of dye-sensitized solar cells

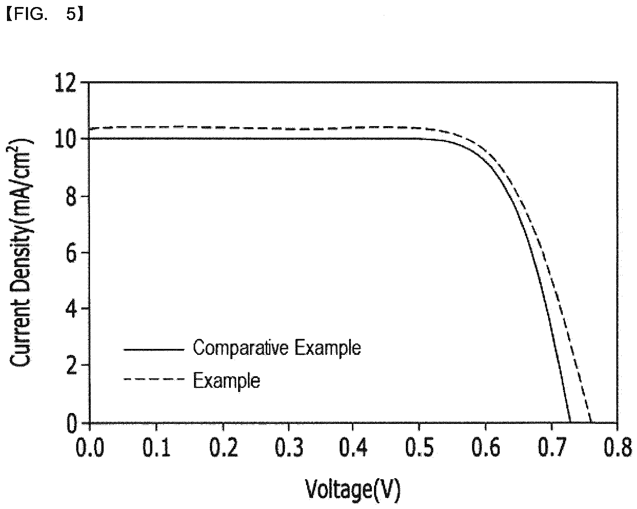

In order to evaluate the performance of a dye-sensitized solar cell, the properties (open circuit voltage (Voc), current density (Jsc), fill factor (FF), and photo conversion efficiency (η)) of the dye-sensitized solar cells prepared in Example 1 and Comparative Example 1 were measured and are shown in the following Table 1 and FIG. 5.

**[Table 1]**

| | Voc (V) | Jsc (mA/cm²) | FF (%) | η (%) |
|---|---|---|---|---|
| Example 1 | 0.760 | 10.37 | 73.52 | 5.79 |
| Comparative Example 1 | 0.729 | 10.05 | 76.40 | 5.59 |

As shown in Table 1, it was confirmed that when a membrane was formed on all the surfaces of a working electrode including the surface of a oxide semiconductor layer and the surface of the dye, the recombination of electrons was prevented, and thus the open circuit voltage was increased and the separation of dye was prevented, and thus, the current density was improved and the efficiency of a cell was generally increased.

### [Experiment 2] Comparison of the properties of dye-sensitized solar cells

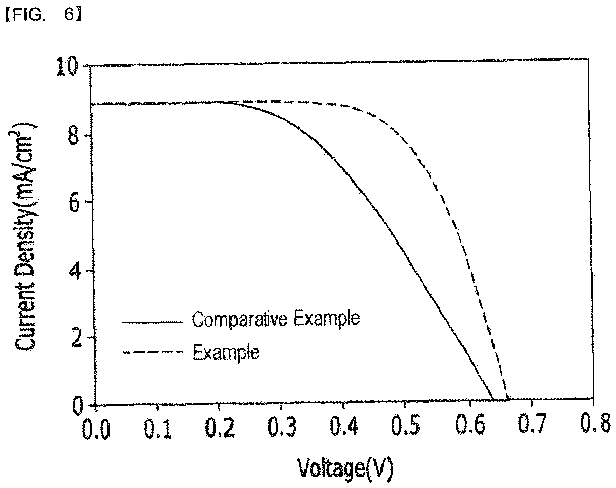

In order to evaluate the reliability of a dye-sensitized solar cell, the properties (open circuit voltage (Voc), current density (Jsc), fill factor (FF), and photo conversion efficiency (η)) of the dye-sensitized solar cells prepared in Example 1 and Comparative Example 1 were measured and are shown in the following Table 2 and FIG. 6.

**[Table 2]**

| | Voc (V) | Jsc (mA/cm²) | FF (%) | η (%) |
|---|---|---|---|---|
| Example 2 | 0.663 | 8.87 | 66.75 | 3.92 |
| Comparative Example 2 | 0.638 | 8.89 | 49.30 | 2.80 |

As shown in Table 2, it was confirmed that when a membrane was formed on the surface of a counter electrode, the dye separated from a working electrode was prevented from being readsorbed to a counter electrode, and thus the open circuit voltage was increased and a fill factor was significantly improved, and the reliability and efficiency of a cell were generally increased.

### [Experiment 3] Comparison of the reliabilities of dye-sensitized solar cells

When storing at 60 °C, FF changes were compared, and are shown in Table 3, (without a membrane) and Table 4 (with a membrane).

**[Table 3]**

| Time(h) | Voc(V) | Isc(mA) | Jsc (mA/cm²) | FF(%) | Eff.(%) |
|---|---|---|---|---|---|
| 0 | 8.6154 | 501.0793 | 10.6431 | 49.7377 | 2.50107 |
| 15 | 8.6879 | 478.3682 | 10.1608 | 48.9334 | 2.368888 |
| 48 | 8.6603 | 488.619 | 10.3785 | 42.3034 | 2.08516 |
| 96 | 8.6257 | 475.0865 | 10.091 | 36.701 | 1.751874 |
| 168 | 8.6417 | 443.0722 | 9.411 | 31.342 | 1.397842 |

**[Table 4]**

| Time(h) | Voc(V) | Isc (mA) | Jsc (mA/cm²) | FF(%) | Eff.(%) |
|---|---|---|---|---|---|
| 0 | 8.7035 | 491.7924 | 10.4459 | 49.9176 | 2.4888 |
| 15 | 8.7367 | 468.7227 | 9.9559 | 49.6609 | 2.3689 |
| 48 | 8.7806 | 491.1402 | 10.432 | 49.1221 | 2.4676 |
| 96 | 8.7349 | 483.3442 | 10.2664 | 49.0793 | 2.4137 |
| 168 | 8.6903 | 486.6368 | 10.3364 | 49.5094 | 2.4389 |
| 264 | 8.6169 | 496.9152 | 10.5547 | 48.8938 | 2.4387 |
| 528 | 8.5027 | 502.2829 | 10.6687 | 48.6653 | 2.421 |
| 768 | 8.435 | 493.9712 | 10.4922 | 48.6412 | 2.3608 |
| 1032 | 8.4154 | 501.0793 | 10.6431 | 48.185 | 2.3668 |

A dye-sensitized solar cell including a counter electrode on which a membrane is formed, as shown in FIG. 3, was prepared by a common preparation process of a dye-sensitized solar cell, except that the surface of the counter electrode was dipped in a solution including isooctyltrimethoxysilane.

Herein, the counter electrode was treated with an isooctyltrimethoxysilane solution, after platinum was formed.

The conditions were as follows.

On FTO glass, a DTY5 photoelectrode paste (8 *µ*m, Dongjin Semichem Co., Ltd., Korea) was coated by a screen printing method. The paste on the photoelectrode was calcined at 450 °C for 30 minutes to form a TiO₂ thin film layer with a thickness of 4 *µ*m.

The calcined thin film layer was immersed in a dye solution in which 0.2 mM of D35 was dissolved in mixed solvents of acetonitrile and t-butyl alcohol at a volume ratio of 1:1, at room temperature for 20 hours. The TiO₂ thin film coated with the dye was rinsed with ethanol to prepare a working electrode.

In order to prepare a counter electrode, a solution of 7 mM HPtCl₆ was dripped on FTO glass, and then calcined at 450 °C for 20 minutes to form a catalyst layer. The catalyst layer was immersed in an isooctyltrimethoxysilane solution for 30 minutes, then rinsed with ethanol, and thereafter, a solar cell was manufactured according to a common solar cell manufacturing method.

The dye-sensitized solar cell module including a counter electrode treated with a membrane according to the present invention exhibited excellent effects, particularly in terms of FF, compared to a dye-sensitized solar cell module that was not treated with a membrane, and even after about 1000 hours, it maintained stable efficiency within 5 %.

## Claims

1. A dye-sensitized solar cell comprising:
a working electrode comprising a conductive film, an oxide semiconductor on the conductive film, and a dye on the oxide semiconductor;
a counter electrode opposing the working electrode;
an electrolyte solution intervening between the working electrode and the counter electrode; and
a membrane covering at least a part of the dye or the counter electrode.

2. The dye-sensitized solar cell according to claim 1, wherein the membrane covers the dye.

3. The dye-sensitized solar cell according to claim 2, wherein the membrane also covers the oxide semiconductor.

4. The dye-sensitized solar cell according to claim 3, wherein the membrane also covers the conductive film.

5. The dye-sensitized solar cell according to claim 4, further comprising an additional membrane covering the counter electrode.

6. The dye-sensitized solar cell according to claim 1, wherein the membrane covers the counter electrode.

7. The dye-sensitized solar cell according to any one of claims 1 to 6, wherein the membrane or the additional membrane comprises at least one of a condensation product of the following Chemical Formula 1 or a condensation product of the following Chemical Formula 2, and a condensation product of Chemical Formula 1 and Chemical Formula 2:
[Chemical Formula 1] A(OR)3
[Chemical Formula 2] (OR)₃A-X-B(OR)₃
wherein A and B are each independently SiR, GeR, P, PR₂, or Al,
each R is independently hydrogen, deuterium, a linear or branched C₁₋₃₀ alkyl group, or a C₃₋₃₀ cycloalkyl group, and
X is 0 or one of a C₂₋₃₀ alkene, a C₆₋₃₀ aryl, an alkoxy, an epoxy, an amine, an ester, an amide, a carbonyl, an ether, a thioether, a thiophene, a furan, or a cyclohexyl.

8. The dye-sensitized solar cell according to any one of claims 1 to 6, wherein the membrane does not pass a dye therethrough, but passes electrolyte elements therethrough.

9. The dye-sensitized solar cell according to any one of claims 1 to 6, wherein the membrane consists of at least one molecular layer.

10. The dye-sensitized solar cell according to any one of claims 1 to 6, wherein the thickness of the membrane is 0.1 Å to 1000 Å.
